# EUROPEAN PATENT SPECIFICATION

(11) **EP 2 523 175 B1**
(45) Date of publication and mention of the grant of the patent: **02.07.2014**
(21) Application number: 12167418.8
(22) Date of filing: 10.05.2012
(51) Int. Cl.: G08G 5/00, G01C 23/00

(54) **System and method for improving viewability of primary flight display**
System und Verfahren mit verbesserter Sichtbarkeit der Hauptfluganzeige
Système et procédé avec visibilité ameliorée de l'écran de vol primaire

(30) Priority: 11.05.2011 US 201113105146
(43) Date of publication of application: 14.11.2012
(73) Proprietor: GE Aviation Systems LLC, Grand Rapids, MI 49512-1991 (US)
(72) Inventor: Thomson, Robert William, Cheltenham, Gloucestershire GL52 8SF (GB)
(74) Representative: Williams, Andrew Richard

(56) References cited:
- EP-A1- 2 360 454
- US-A- 6 111 525
- US-A1- 2003 023 354
- US-A1- 2007 182 590

## Description

### BACKGROUND OF THE INVENTION

The field of the invention relates generally to display devices, and more specifically, to a method and systems for improving visual resolution of primary flight display screens.

At least some known aircraft include primary flight display systems including continuous flight status input to a flight crew, e.g., the pilot, co-pilot, and/or navigator of an aircraft. Such information typically includes aircraft attitude, altitude, vertical speed, horizontal air speed, and horizontal situation, e.g., aircraft heading. Also, such information contributes to improved situational awareness. Situational awareness is defined as continuous and conscious perception by flight crew, e.g., the pilot and co-pilot, of complex and dynamic relevant elements of the current flight environment. Such elements may include other aircraft, weather conditions, and a physical status of the known aircraft. Such situational awareness may also include an ability to forecast and then respond appropriately moment-to-moment and event-to-event to execute tasks based on those perceptions. A typical flight information system is described in US 2007/0182590.

At least some known primary flight display systems are installed in aircraft cockpits that are space-confined. Such primary flight display systems may include a primary flight display screen having a display height appropriate for the existing space restrictions. Many known primary flight display systems include horizontal situation indicators positioned within an integrated flight display screen. Such horizontal situation indicators may use 25% to 50 % of the available display height, and more typically, about 33% thereof. The proportional size of the horizontal situation indicators thereby compresses the other indicators, such as aircraft attitude, altitude, vertical speed, and horizontal air speed indicators, thereby decreasing their visual resolution to the flight crew, and may therefore negatively impact the flight crew's situational awareness.

A primary flight display is needed that includes a horizontal situation indicator that uses less display height of the primary flight display, thereby expanding the available height available for the other indicators and improving the situational awareness of the flight crew.

### BRIEF DESCRIPTION OF THE INVENTION

In one embodiment, an aircraft management system is provided in accordance with claim 1 herein.

In another embodiment, a method of displaying a horizontal situation indicator (HSI) for an aircraft is provided in accordance with claim 8 herein.

In yet another embodiment, an aircraft is provided in accordance with claim 7 herein.

### BRIEF DESCRIPTION OF THE DRAWINGS

FIGS. 1-5 show exemplary embodiments of the method and system described herein.
FIG. 1 is a side elevational view of an aircraft including an exemplary aircraft management system (AMS) and an exemplary primary flight display system.
FIG. 2 is a schematic diagram of an exemplary primary flight display screen including an exemplary horizontal situation indicator (HSI) that is generated by the primary flight display system shown in FIG. 1.
FIG. 3 is a schematic diagram of the HSI shown in FIG. 2.
FIG. 4 is a flow diagram of an exemplary method of displaying the HSI shown in FIG. 2 for the aircraft shown in FIG.1.
FIG. 5 is a continuation of the flow diagram from FIG.4.
FIG. 6 is a simplified schematic diagram of the AMS suitable for use with the aircraft shown in FIG. 1.

### DETAILED DESCRIPTION OF THE INVENTION

The exemplary methods and systems described herein overcome at least some disadvantages of known primary flight display systems by providing a horizontal situation indicator (HSI) that uses less of the horizontal height of the primary flight display screen. The displayed HSI described herein is angled such that the indicator appears as a three-dimensional (3D) object on a two-dimensional (2D) display. As a result of the angled perspective of the displayed HSI, only the portion of the displayed HSI that is immediately usable by the flight crew is shown. Moreover, as a result of the angled perspective of the displayed HSI, the heading indication portion of the HSI appears to rotate as the aircraft changes its heading, thereby maintaining the useful portion of the HSI on the primary flight display screen. Therefore, maintaining only the useful portion of the HSI on the primary flight display screen while not displaying the unused portion facilitates extending the remaining indicators to use a greater percentage of the height of the primary flight display screen.

Furthermore, the 3D imaging features of the displayed HSI facilitate additional indication features to be included thereon as per the claimed invention - namely, indications from a Traffic Collision Avoidance System (TCAS) of other aircraft, including the relative altitude of the other aircraft. These benefits facilitate an improved situational awareness of the flight crew.

As used herein, an element or step recited in the singular and proceeded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

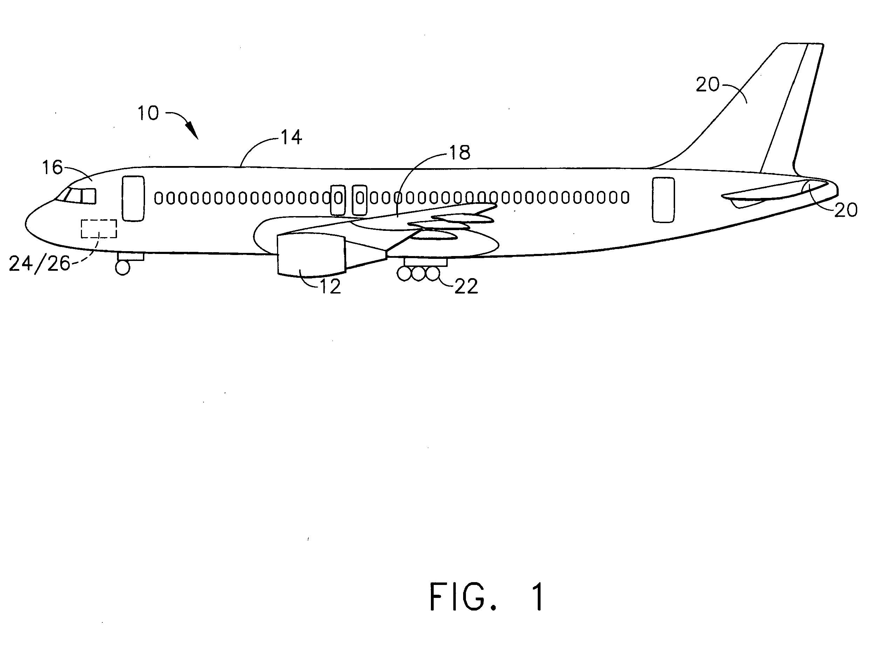

FIG. 1 is a side elevational view of an aircraft 10 in accordance with an embodiment of the present disclosure. Aircraft 10 includes one or more propulsion engines 12 coupled to a fuselage 14, a cockpit 16 positioned in fuselage 14, wing assemblies 18 extending outward from fuselage 14, a tail assembly 20, and a landing assembly 22. Aircraft 10 also includes an aircraft management system (AMS) 24 that includes a primary flight display system 26 for flying vehicle 10, displaying a primary flight display screen (not shown in FIG. 1), and facilitating a plurality of other systems and subsystems to enable proper operation of aircraft 10. While aircraft 10 is illustrated as a winged airplane, alternative embodiments of AMS 24 and primary flight display system 26 may be implemented within other aircraft, including, without limitation, helicopters.

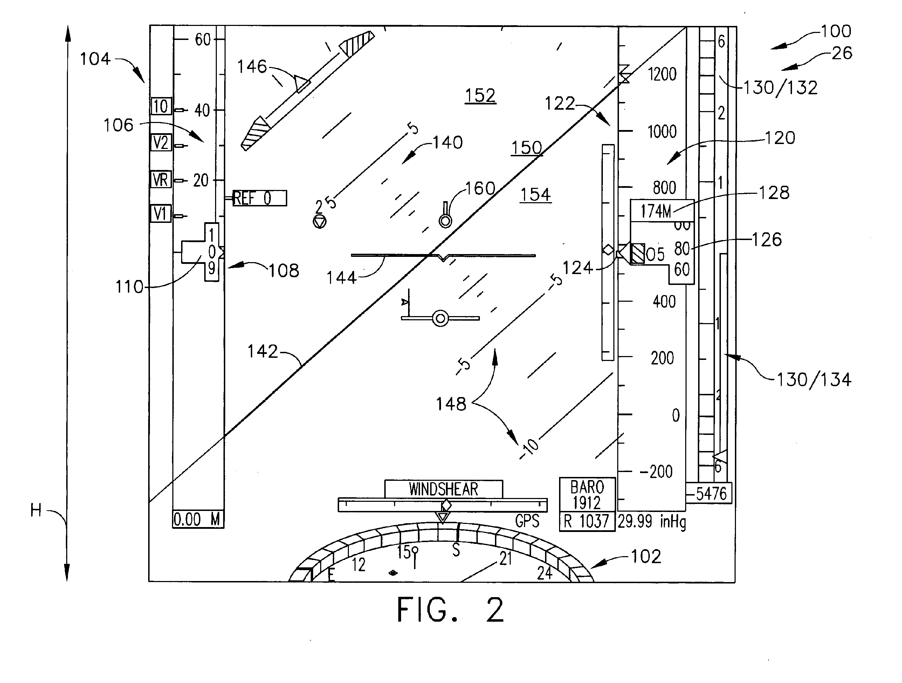

FIG. 2 is a schematic diagram of an exemplary primary flight display screen 100 including an exemplary horizontal situation indicator (HSI) 102 displayed by primary flight display system 26. In the exemplary embodiment, primary flight display screen 100 includes an airspeed indicator 104 having a vertical linear scale 106, a pointer 108, and a digital readout 110 in pointer 108. System 26 is programmed to show airspeed indicator 104 as represented by a vertical linear display with a dynamic action similar to that of a moving tape or rolling drum, whereby scale 106 shifts up or down such that the present value is readily visible.

Also, in the exemplary embodiment, primary flight display screen 100 includes an altitude indicator 120 having a vertical linear scale 122, a pointer 124, and a digital readout in units of feet 126 and meters 128. System 26 is programmed to show altitude indicator 120 as represented by a vertical linear display with a dynamic action similar to that of a moving tape or rolling drum, whereby scale 122 shifts up or down such that the present value is always readily visible and pointer 124 is centered on scale 122. System 26 shows digital readout 126 as represented by a vertical linear display with a dynamic action similar to that of a moving tape or rolling drum, whereby the values in readout 126 shift up and down such that the present value is readily visible.

Further, in the exemplary embodiment, primary flight display screen 100 includes a vertical speed indicator 130. Vertical speed indicator 130 includes an upper portion 132 for displaying the rate of increasing altitude. Vertical speed indicator 130 also includes a lower portion 134 for displaying the rate of decreasing altitude. Portions 132 and 134 of vertical speed indicator 130 are displayed to represent vertical scales wherein the scale graduations are expanded toward the bottom of portion 132 and the top of portion 134 and narrowed toward the top of portion 132 and the bottom of portion 134.

Moreover, in the exemplary embodiment, primary flight display screen 100 includes an attitude indicator 140 centrally located on screen 100 between airspeed indicator 104 and altitude indicator 120. Attitude indicator 140 includes an artificial horizon 142, an aircraft reference symbol 144, a roll or bank indicator 146, and a pitch indicator ladder 148. Also, in the exemplary embodiment, primary flight display screen 100 includes a display background 150 in the area of pitch indicator ladder 148. Display background 150 is preferably differentially colored (not shown) in a portion above 152 and a portion below 154 artificial horizon 142. Alternatively, a synthetic vision system may be used to facilitate visual differentiation between portions 152 and 154. Further, in the exemplary embodiment, primary flight display screen 100 includes TCAS indications 160 of other aircraft.

In the exemplary embodiment, primary flight display screen 100 is shown on a liquid crystal diode (LCD) device (not shown). However, screen 100 may be configured to be shown on any type of display device that enables operation of primary flight display system 26 as described herein, including, without limitation, cathode ray tube (CRT) devices. Primary flight display screen 100 defines a screen height H.

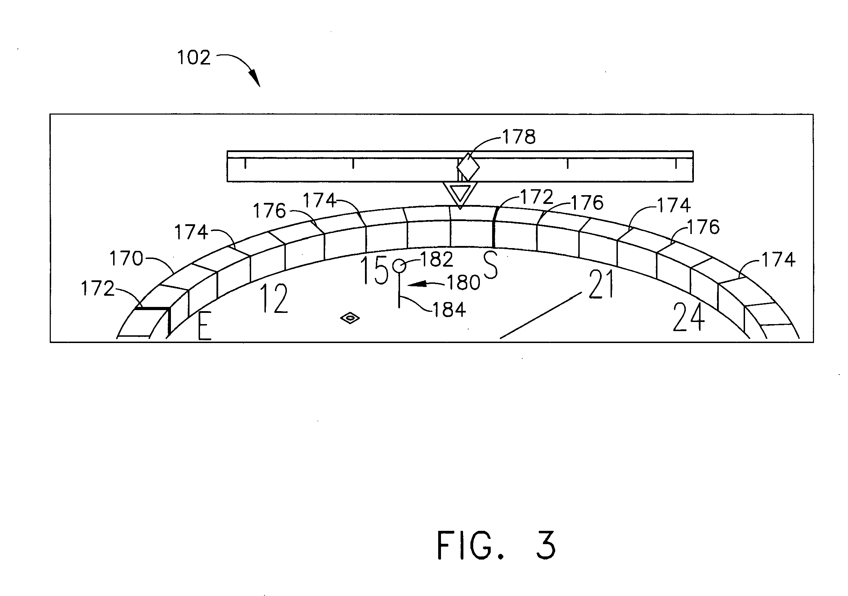

FIG. 3 is a schematic diagram of horizontal situation indicator (HSI) 102. In the exemplary embodiment, primary flight display system 26 (shown in FIGs. 1 and 2) is programmed to show HSI 102 as represented by a compass device 170 configured to appear angled, or receding, into screen 100, such that a 3D receding appearance of compass 170 is facilitated. Compass device 170 includes the standard cardinal headings 172 (only East (E) and South (S) shown) and numerical values 174 between each cardinal heading 172. Compass device 170 also includes a plurality of unlabeled divisions 176 positioned between numerical values 174 and cardinal headings 172 to provide a flight crew with incremental heading information. In the exemplary embodiment, primary flight display system 26 shows cardinal headings 172, numerical values 174, and unlabeled divisions 176 in a receding perspective to facilitate visual resolution by the flight crew.

Also, in the exemplary embodiment, primary flight display system 26 is programmed to show compass device 170 of HSI 102 to appear to rotate in a manner similar to a standard compass as a function of the current heading of aircraft 10 (shown in FIG. 1). Further, in the exemplary embodiment, HSI 102 includes a compass pointer 178.

In the exemplary embodiment, primary flight display system 26 is programmed to show HSI 102 with a receding perspective defined by an angle within a range of 60° to 70° referenced to a virtual plane defined by the screen of the display device (neither shown) on which primary flight display screen 100 is generated. Alternatively, any receding angle that enables operation of HSI 102 as described herein is used. Also, in the exemplary embodiment, the selected receding angle is programmed into primary flight display system 26 and is not adjustable by the flight crew.

Further, in the exemplary embodiment, HSI 102 is oriented and sized to use less than approximately 10% of screen height H (shown in FIG. 2). Therefore, other indicators including, without limitation, airspeed indicator 104, altitude indicator 120, and attitude indicator 140 may use the remaining approximately 90% of screen height H, thereby improving visual resolution of those indications. Less than 50% of HSI 102 is visible on primary flight display screen 100 and HSI 102 rotates with the heading of aircraft 10. Moreover, the value of angle of apparent recession and the size and orientation of cardinal headings 172, numerical values 174, and unlabeled divisions 176 facilitate sufficient visual resolution to the flight crew. Therefore, HSI 200 facilitates an overall improvement in resolution of primary flight display screen 100, thereby facilitating an improvement of situational awareness of the flight crew.

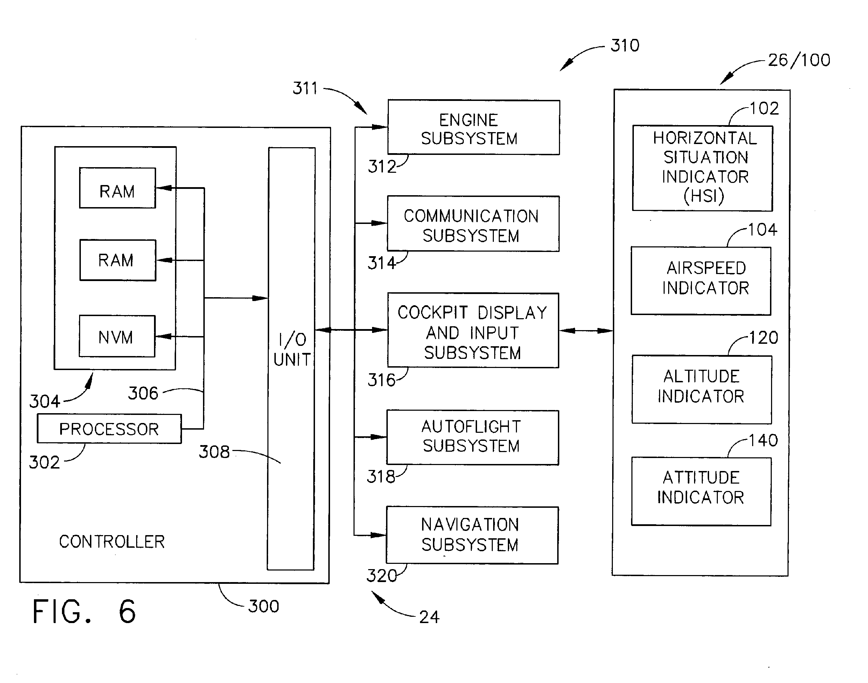

In some alternative embodiments, the distribution of screen height H to HSI 102 and indicators 104, 120, and 140 is configured differently from the 10% - 90% distribution, respectively. For example, a configuration table (not shown) may be programmed to load into memory 304 (shown in FIG. 6) on powering up primary flight display system 26 to display HSI 102 and indicators 104, 120, and 140 with respect to any dimensions of primary flight display screen 100. The receding perspective angle of HSI 102 is adjusted automatically. Also, in some alternative embodiments, any predetermined proportion of HSI 102 is visible on primary flight display screen 100.

In the exemplary embodiment, HSI 102 includes TCAS indications 180 of other aircraft. TCAS indication 180 includes an upper spherical portion 182 that represents another aircraft. TCAS indication 180 also includes a lower vertical, linear portion 184 that is representative of a relative altitude of the other aircraft. Therefore, TCAS indication 180 facilitates a 3D representation of other aircraft on HSI 102.

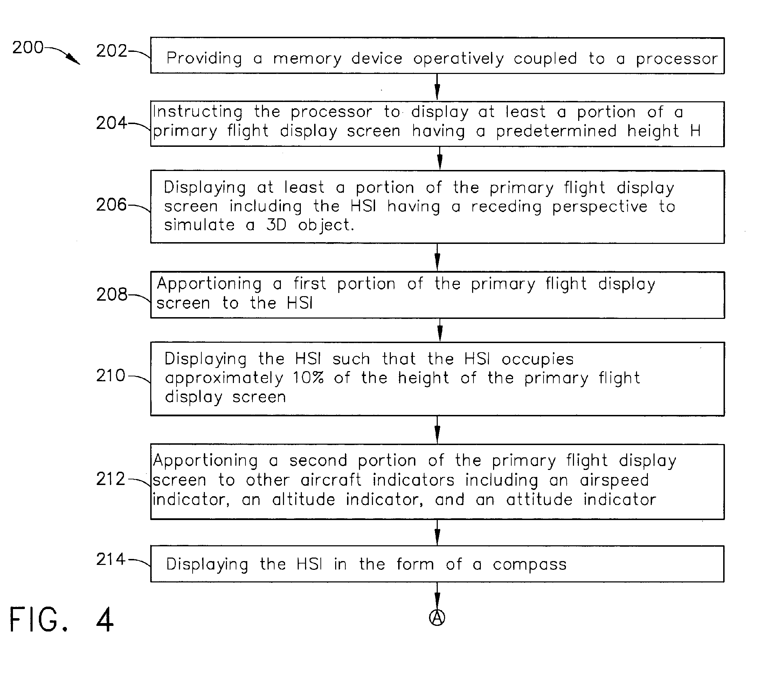

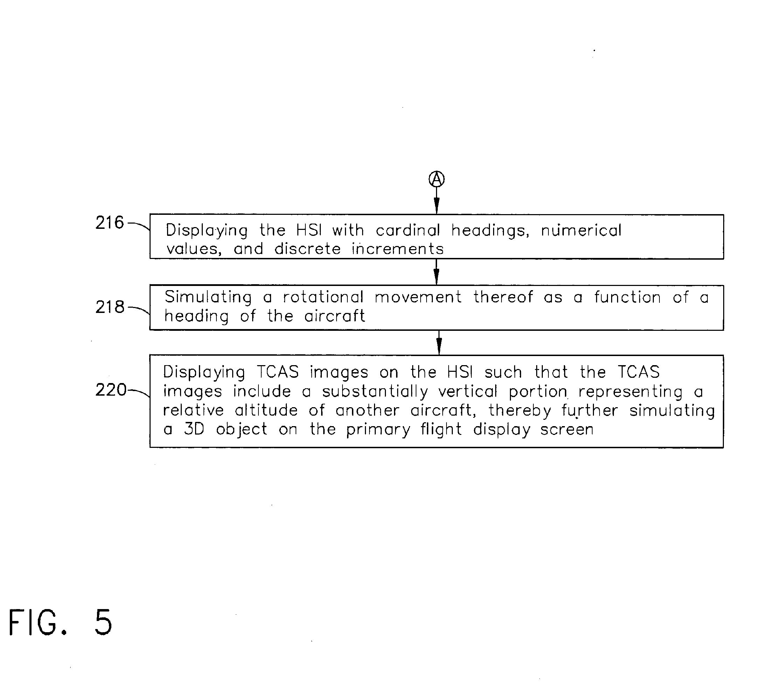

FIGs. 4 and 5 illustrate a flow diagram of an exemplary method 200 of displaying HSI 102 (shown in FIG. 3) for aircraft 10 (shown in FIG.1). In the exemplary embodiment, method 200 includes providing 202 a memory device 304 operatively coupled to a processor 302 (both shown in FIG. 6). Memory device 304 includes programmed computer instructions that instruct 204 processor 302 to display at least a portion of primary flight display screen 100 (shown in FIG. 2) having a predetermined height H (shown in FIG. 2). At least a portion of primary flight display screen 100 is displayed 206 including HSI 102 having a receding perspective to simulate a 3D object.

In some embodiments, method 200 also includes apportioning 208 a first portion of primary flight display screen 100 to HSI 102 that includes displaying 210 HSI 102 such that HSI 102 occupies approximately 10% of height H of primary flight display screen 100. Also, in some embodiments, method 200 includes apportioning 212 a second portion of primary flight display screen 100 to other aircraft indicators including airspeed indicator 104, altitude indicator 120, and attitude indicator 140 (all shown in FIG. 3).

Furthermore, in the exemplary embodiment, primary flight display screen 100 displays 214 HSI 102 in the form of a compass. Primary flight display screen 100 displays 216 HSI 102 with cardinal headings 172, numerical values 174, and discrete increments 176 (all shown in FIG. 3) and simulates 218 a rotational movement of cardinal headings 172, numerical values 174, and discrete increments 176 as a function of a heading of aircraft 10.

According to the present invention, primary flight display screen 100 displays 220 a TCAS image 180 generated on HSI 102 such that the TCAS image 180 includes a substantially vertical portion 184 representing a relative altitude of another aircraft 182, thereby further simulating a 3D effect on primary flight display screen 100.

FIG. 6 is a simplified schematic diagram of an aircraft management system 24 for use with aircraft 10 (shown in FIG. 1). In the exemplary embodiment, AMS 24 includes a controller 300 that includes a processor 302 and a memory 304. Processor 302 and memory 304 are communicatively coupled via a bus 306 to an input-output (I/O) unit 308 that is also communicatively coupled to a plurality of subsystems 310 via a bus 311 or a plurality of dedicated buses. In various embodiments, subsystems 310 may include an engine subsystem 312, a communications subsystem 314, a cockpit display and input subsystem 316, an autoflight subsystem 318, a trajectory reference subsystem (not shown), and/or a navigation subsystem 320. Other subsystems not mentioned and more or fewer subsystems 310 may also be present.

In the exemplary embodiment, engine subsystem 312 is configured to generate autothrottle signals to control the speed of aircraft 10 using engines 12 (shown in FIG. 1). Controller 300 is configured to receive input signals from one or more subsystems 310 of AMS 24 and to generate signals that may be used to control the thrust of a gas turbine engine, torque and/or speed of an electric motor, or power output of an internal combustion engine. Autoflight subsystem 318 is configured to control the flight surface actuators that change the path of aircraft 10 to follow a flight path trajectory provided by AMS 24. Navigation subsystem 320 provides current location information to controller 300. Communications subsystem 314 provides communication between an air traffic controller (ATC) and controller 300 and for transmitting signals to the ATC, and for receiving signals from the ATC.

In the exemplary embodiment, cockpit display and input subsystem 316 includes the cockpit displays on which navigation information, aircraft flight parameter information, fuel and engine status, and other information are displayed. Such cockpit displays include, without limitation, primary flight display screen 100 as a portion of primary flight display system 26. Primary flight display screen 100 displays, without limitation, HSI 102, airspeed indicator 104, altitude indicator 120, and attitude indicator 140.

While FIG. 6 illustrates a particular architecture suitable for displaying primary flight display screen 100, other architectures for aircraft management system (AMS) 24 and primary flight display system 26 may also be used.

In the exemplary embodiment, computer instructions for displaying primary flight display screen 100 reside in memory 304 along with aircraft altitude, heading, roll or bank, pitch, TCAS data for other aircraft, and other information useful for enabling proper operation of aircraft 10. As AMS 24, including primary flight display system 26, displays primary flight display screen 100, AMS 24 uses information from navigation subsystem 320 and aircraft performance information stored in memory 304. Such information may be conveniently input from cockpit display and input subsystem 316 and/or obtained from non-transient computer-readable media, for example CD ROMs containing such information, signals received from offboard control systems, or a combination thereof.

Controller 300 may be embodied in a stand-alone hardware device or may be exclusively a firmware and/or software construct executing on AMS 24 or other aircraft system.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by processor 302, including RAM memory, ROM memory, EPROM memory, EEPROM memory, and non-volatile RAM (NVRAM) memory. The above memory types are exemplary only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect is provided by a computer-generated HSI oriented and sized to use less than approximately 10% of the screen height of an integrated primary flight display screen. Therefore, other indicators, including, without limitation, an airspeed indicator, an altitude indicator, and an attitude indicator, may use the remaining approximately 90% of the screen's height, thereby improving visual resolution of those indications to the flight crew. Any such resulting program, having computer-readable code means, may be embodied or provided within one or more computer-readable media, thereby making a computer program product, i.e., an article of manufacture, according to the discussed embodiments of the disclosure. The computer-readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

Exemplary benefits of the system, method, and apparatus described herein include at least one of: (a) decreasing an amount of screen space for an HSI by using a 3D effect on a 2D screen to generate an apparent receding, perspective attitude for the HSI; (b) increasing the amount of screen space for other indicators such as those for airspeed, altitude, and attitude; (c) facilitating additional indication features to be included on the HSI, e.g., indications of other aircraft from a TCAS, including the relative altitude of the other aircraft.

The above-described embodiments of a primary flight display system embedded within an aircraft management system for use with an aircraft provide a cost-effective and reliable means for providing a horizontal situation indicator oriented and sized to use less than approximately 10% of the screen height of an integrated primary flight display screen. Therefore, other indicators including, without limitation, an airspeed indicator, an altitude indicator, and an attitude indicator may use the remaining approximately 90% of the screen's height, thereby improving visual resolution of those indications to the flight crew. More specifically, the methods and systems described herein facilitate decreasing an amount of screen space for a horizontal situation indicator by using a 3D effect on a 2D screen to generate an apparent receding, perspective attitude for the horizontal situation indicator. Moreover, displaying such 3D effect facilitates providing sufficient resolution to the flight crew of horizontal situation indicators. In addition, the above-described methods and systems facilitate additional indication features to be included on the horizontal situation indicator, e.g., indications from a TCAS of other aircraft, including the relative altitude of the other aircraft. As a result, the methods and systems described herein facilitate improving a situational awareness of the flight crew and facilitate operating aircraft in a cost-effective and reliable manner.

Exemplary embodiments of a method, system, and apparatus for a primary flight display system embedded within an aircraft management system for use in an aircraft are described above in detail. The system, method, and apparatus are not limited to the specific embodiments described herein, but rather, components of systems and/or steps of the methods may be utilized independently and separately from other components and/or steps described herein. For example, the methods may also be used in combination with other aircraft management systems and methods, and are not limited to practice with only the aircraft engine systems and methods as described herein. Rather, the exemplary embodiment can be implemented and utilized in connection with many other aircraft system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An aircraft management system (24) for use in displaying a primary flight display screen (100), said primary flight display screen having a predetermined height (H) and comprising a horizontal situation indicator (HSI) (102), said aircraft management system comprising a processor (302) and a memory device (304) operatively coupled to said processor, said memory device comprising programmed computer instructions that instruct said processor to display said HSI for an aircraft (10), said HSI comprising a receding perspective to simulate a three-dimensional (3D) object;
**characterized in that**:
said memory device (304) further comprises programmed computer instructions that instruct said processor (302) to display a Traffic Collision Avoidance System (TCAS) image on said HSI, said TCAS image comprises a substantially vertical portion (184) representing a relative altitude of another aircraft (182), thereby further simulating a 3D object on said primary flight display screen (100).

2. An aircraft management system (24) in accordance with Claim 1, wherein said memory device (304) further comprises programmed computer instructions that instruct said processor (302) to display said HSI (102) such that a first portion of said primary flight display screen (100) is apportioned to said HSI and a second portion of said primary flight display screen is apportioned to at least one additional aircraft indicator (104/120/140).

3. An aircraft management system (24) in accordance with Claim 2, wherein said at least one additional aircraft indicator (104/120/140) comprises at least one of an airspeed indicator (104), an altitude indicator (120), and an attitude indicator (140).

4. An aircraft management system (24) in accordance with either of Claim 2 or 3, wherein said memory device (304) further comprises programmed computer instructions that instruct said processor (302) to display said HSI (102) such that said HSI is displayed occupying a predetermined proportion of the height (H) of said primary flight display screen (100).

5. An aircraft management system (24) in accordance with any preceding Claim, wherein said memory device (304) further comprises programmed computer instructions that instruct said processor (302) to display said HSI (102) such that said HSI is displayed in the form of a compass comprising a plurality of cardinal headings (172), numerical values (174), and discrete increments (176).

6. An aircraft management system (24) in accordance with Claim 5, wherein said memory device (304) further comprises programmed computer instructions that instruct said processor (302 to display said HSI (102) such that said HSI is displayed in the form of a compass such that only a predetermined proportion of the compass is visible on said primary flight display screen (100), and said cardinal headings (172), numerical values (174), and discrete increments (176) shift on said HSI based on a heading of the aircraft (10), thereby simulating a rotational movement of said HSI.

7. An aircraft (10) comprising:
a cockpit (16); and
an aircraft management system (24) according to any one of the preceding claims.

8. A method (200) of displaying a horizontal situation indicator (HSI) (102) for an aircraft (10) including an aircraft management system (AMS) (24), said method comprising:
providing (202) a memory device (304) operatively coupled to a processor (302), the memory device including programmed computer instructions that instruct the processor to display at least a portion of a primary flight display screen (100) having a predetermined height; and
displaying (206) at least a portion of the primary flight display screen (100) including a horizontal situation indicator (HSI) (102) having a receding perspective to simulate a three-dimensional (3D) object;
**characterized in that**:
the method further comprises displaying (220) the HSI (102) such that the HSI displays a Traffic Collision Avoidance System (TCAS) image thereon, the TCAS image includes a substantially vertical portion representing a relative altitude of another aircraft, thereby further simulating a 3D object on the primary flight display screen (100).

9. A method (200) in accordance with Claim 8, further comprising apportioning (208,212) a first portion of the primary flight display screen (100) to the HSI (102) and a second portion of the primary flight display screen (100) to at least one additional aircraft indicator (104,120,140).

10. A method (200) in accordance with Claim 9, wherein apportioning (212) a second portion of the primary flight display screen (100) to at least one aircraft indicator (104,120,140) comprises displaying at least one of an airspeed indicator (104), an altitude indicator (120), and an attitude indicator (140) within the second portion of the primary flight display screen (100).

11. A method (200) in accordance with either of Claim 9 or 10, wherein apportioning (208) a first portion of the primary flight display screen (100) to the HSI (102) comprises displaying (210) the HSI such that the HSI occupies a predetermined proportion of the height of the primary flight display screen (100).

12. A method (200) in accordance with any one of Claims 8 to 11, wherein displaying (206) at least a portion of the primary flight display screen (100) including an HSI (102) comprises displaying (214) the HSI in the form of a compass.

13. A method (200) in accordance with Claim 12, wherein displaying (214) the HSI in the form of a compass comprises:
displaying (216) a plurality of cardinal headings (172), numerical values (174), and
discrete increments (176); and
simulating (218) a rotational movement of the cardinal headings, numerical values, and discrete increments as a function of a heading of the aircraft (10).

## Patentansprüche

1. Flugzeugmanagementsystem (24) zum Verwenden beim Anzeigen eines Hauptfluganzeigebildschirms (100), wobei der Hauptfluganzeigebildschirm eine vorbestimmte Höhe (H) aufweist und einen Kursanzeiger (HSI) (102) umfasst, wobei das Flugzeugmanagementsystem einen Prozessor (302) und eine Speichereinrichtung (304), die operativ mit dem Prozessor verbunden ist, umfasst, wobei die Speichereinrichtung programmierte Computerinstruktionen umfasst, die den Prozessor instruieren, das HSI für ein Flugzeug (10) anzuzeigen, wobei das HSI eine fliehende Perspektive umfasst, um ein dreidimensionales (3D-)Objekt zu simulieren;
**dadurch gekennzeichnet, dass**:
die Speichereinrichtung (304) außerdem programmierte Computerinstruktionen umfasst, die den Prozessor (302) instruieren, ein Bild eines Zusammenstoß-Warnsystems (TCAS) auf dem HSI anzuzeigen, wobei das TCAS-Bild einen im Wesentlichen vertikalen Bereich (184) aufweist, der eine relative Flughöhe eines anderen Flugzeugs (182) repräsentiert, wodurch es außerdem ein 3D-Objekt auf dem Hauptfluganzeigebildschirm (100) simuliert.

2. Flugzeugmanagementsystem (24) gemäß Anspruch 1, bei dem die Speichereinrichtung (304) außerdem programmierte Computerinstruktionen umfasst, die den Prozessor (302) instruieren, den HSI (102) derart anzuzeigen, dass ein erster Bereich des Hauptfluganzeigebildschirms (100) dem HSI zugeteilt ist und ein zweiter Teil des Hauptfluganzeigebildschirms mindestens einem zusätzlichen Flugzeuganzeiger (104/120/140) zugeteilt ist.

3. Flugzeugmanagementsystem (24) gemäß Anspruch 2, bei dem der mindestens eine zusätzliche Flugzeuganzeiger (104/120/140) mindestens einen von einem Fahrtmesseranzeiger (104), einem Höhenanzeiger (120) und einem Fluglageanzeiger (140) umfasst.

4. Flugzeugmanagementsystem (24) entweder gemäß Anspruch 2 oder gemäß Anspruch 3, bei dem die Speichereinrichtung (304) außerdem programmierte Computerinstruktionen umfasst, die den Prozessor (302) instruieren, den HSI (102) derart anzuzeigen, dass der HSI angezeigt wird, so dass er eine vorbestimmte Proportion der Höhe (H) des Hauptfluganzeigebildschirms (100) einnimmt.

5. Flugzeugmanagementsystem (24) gemäß einem der vorhergehenden Ansprüche, bei dem die Speichereinrichtung (304) außerdem programmierte Computerinstruktionen umfasst, die den Prozessor (302) instruieren, den HSI (102) derart anzuzeigen, dass der HSI in der Form eines Kompasses, der eine Vielzahl von Haupthimmelsrichtungen (172), Zahlwerten (174) und diskreten Abstufungen (176) umfasst, dargestellt ist.

6. Flugzeugmanagementsystem (24) gemäß Anspruch 5, bei dem die Speichereinrichtung (304) außerdem programmierte Computerinstruktionen umfasst, die den Prozessor (302) instruieren, den HSI (102) derart anzuzeigen, dass der HSI in der Form eines Kompasses so angezeigt wird, dass nur eine vorbestimmte Proportion des Kompasses auf dem Hauptfluganzeigebildschirm (100) sichtbar ist, und dass sich die Haupthimmelsrichtungen (172), Zahlwerte (174) und diskreten Abstufungen (176) auf dem HSI auf Grundlage eines Steuerkurses des Flugzeugs (10) verschieben, wodurch sie eine Rotationsbewegung des HSI simulieren.

7. Flugzeug (10), umfassend:
ein Cockpit (16); und
ein Flugzeugmanagementsystem (24) gemäß einem der vorhergehenden Ansprüche.

8. Verfahren (200) zum Anzeigen eines Kursanzeigers (HSI) (102) für ein Flugzeug (10), das ein Flugzeugmanagementsystem (AMS) (24) aufweist, wobei das Verfahren umfasst:
Bereitstellen (202) einer Speichereinrichtung (304), die operativ mit einem Prozessor (302) verbunden ist, wobei die Speichereinrichtung programmierte Computerinstruktionen aufweist, die den Prozessor instruieren, mindestens einen Bereich eines Hauptfluganzeigebildschirms (100), der eine vorbestimmte Höhe aufweist, anzuzeigen; und
Anzeigen (206) mindestens eines Bereichs des Hauptfluganzeigebildschirms (100), der einen Kursanzeiger (HSI) (102) aufweist, der eine flüchtende Perspektive aufweist, um eine dreidimensionales (3D-)Objekt zu simulieren;
**dadurch gekennzeichnet, dass**:
das Verfahren außerdem ein Anzeigen (220) des HSI (102) derart umfasst, dass das HSI auf sich ein Bild eines Zusammenstoß-Warnsystems (TCAS) anzeigt, wobei das TCAS-Bild einen im Wesentlichen vertikalen Bereich aufweist, der eine relative Flughöhe eines anderen Flugzeugs repräsentiert, wodurch es außerdem ein 3D-Objekt auf dem Hauptfluganzeigebildschirm (100) simuliert.

9. Verfahren (200) gemäß Anspruch 8, das außerdem ein Zuteilen (208, 212) eines ersten Bereichs des Hauptfluganzeigebildschirms (100) an das HSI (102) und eines zweiten Bereichs des Hauptfluganzeigebildschirms (100) an mindestens einen zusätzlichen Flugzeuganzeiger (104, 120, 140) umfasst.

10. Verfahren (200) gemäß Anspruch 9, wobei das Zuteilen (212) eines zweiten Bereichs des Hauptfluganzeigebildschirms (100) an mindestens einen Flugzeuganzeiger (104, 120, 140) das Anzeigen von mindestens einem von einem Fahrtmesseranzeiger (104), einem Höhenanzeiger (120) und einem Fluglageanzeiger (140) innerhalb des zweiten Bereichs des Haupifluganzeigebildschirms (100) umfasst.

11. Verfahren (200) gemäß entweder Anspruch 9 oder 10, wobei das Zuteilen (208) eines ersten Bereichs des Hauptfluganzeigebildschirms (100) an das HSI (102) ein Anzeigen (210) des HSI derart umfasst, dass das HSI eine vorbestimmte Proportion der Höhe des Hauptfluganzeigebildschirms (100) belegt.

12. Verfahren (200) gemäß einem der Ansprüche 8 bis 11, wobei das Anzeigen (206) mindestens eines Bereichs des Haupifluganzeigebildschirms (100), der ein HSI (102) aufweist, das Anzeigen (214) des HSI in der Form eines Kompasses umfasst.

13. Verfahren (200) gemäß Anspruch 12, wobei Anzeigen (214) des HSI in der Form eines Kompasses umfasst:
Anzeigen (216) einer Vielzahl von Haupthimmelsrichtungen (172), Zahlwerten (174) und diskreten Abstufungen (176); und
Simulieren (218) einer Rotationsbewegung der Haupthimmelsrichtungen, Zahlwerte und diskreten Abstufungen als eine Funktion eines Steuerkurses des Flugzeugs (10).

## Revendications

1. Système de gestion d'aéronef (24) pour utilisation dans l'affichage d'un écran d'affichage de vol primaire (100), ledit écran d'affichage de vol primaire ayant une hauteur prédéterminée (H) et comprenant un indicateur de situation horizontale (HSI) (102), ledit système de gestion d'aéronef comprenant un processeur (302) et un dispositif à mémoire (304) couplé en service audit processeur, ledit dispositif à mémoire comprenant des instructions informatiques programmées qui donnent instruction audit processeur d'afficher ledit HSI pour un aéronef (10), ledit HSI comprenant une perspective fuyante pour simuler un objet tridimensionnel (3D) ;
**caractérisé en ce que** :
ledit dispositif à mémoire (304) comprend en outre des
instructions informatiques programmées qui donnent instruction audit processeur (302) d'afficher une image du système anticollision de trafic (TCAS) sur ledit HSI, ladite image TCAS comprend une portion sensiblement verticale (184) représentant une altitude relative d'un autre aéronef (182), simulant par ailleurs de la sorte un objet 3D sur ledit écran d'affichage de vol primaire (100).

2. Système de gestion d'aéronef (24) selon la revendication 1, dans lequel ledit dispositif à mémoire (304) comprend en outre des instructions informatiques programmées qui donnent instruction audit processeur (302) d'afficher ledit HSI (102) de sorte qu'une première portion dudit écran d'affichage de vol primaire (100) soit attribuée audit HSI et qu'une seconde portion dudit écran d'affichage de vol primaire soit attribuée à au moins un indicateur d'aéronef supplémentaire (104/120/140).

3. Système de gestion d'aéronef (24) selon la revendication 2, dans lequel ledit au moins un indicateur d'aéronef supplémentaire (104/120/140) comprend au moins l'un d'un anémomètre (104), d'un altimètre (120) et d'un indicateur d'assiette (140).

4. Système de gestion d'aéronef (24) selon l'une quelconque des revendications 2 ou 3, dans lequel ledit dispositif à mémoire (304) comprend en outre des instructions informatiques programmées qui donnent instruction audit processeur (302) d'afficher ledit HSI (102) de sorte que ledit HSI soit affiché en occupant une proportion prédéterminée de la hauteur (H) dudit écran d'affichage de vol primaire (100).

5. Système de gestion d'aéronef (24) selon l'une quelconque des revendications précédentes, dans lequel ledit dispositif à mémoire (304) comprend en outre des instructions informatiques programmées qui donnent instruction audit processeur (302) d'afficher ledit HSI (102) de sorte que ledit HSI soit affiché sous la forme d'un compas comprenant une pluralité de points cardinaux (172), de valeurs numériques (174) et d'incréments discrets (176).

6. Système de gestion d'aéronef (24) selon la revendication 5, dans lequel ledit dispositif à mémoire (304) comprend en outre des instructions informatiques programmées qui donnent instruction audit processeur (302) d'affîcher ledit HSI (102) de sorte que ledit PSI soit affiché sous la forme d'un compas tel que seule une proportion prédéterminée du compas soit visible sur ledit écran d'affichage de vol primaire (100) et que lesdits points cardinaux (172), valeurs numériques (174) et incréments discrets (176) se décalent sur ledit HSI sur la base d'un cap de l'aéronef (10), simulant de la sorte un mouvement de rotation dudit HSI.

7. Aéronef (10) comprenant :
un habitacle (16) ; et
un système de gestion d'aéronef (24) selon l'une
quelconque des revendications précédentes.

8. Procédé (200) d'affichage d'un indicateur de situation horizontale (HSI) (102) pour un aéronef (10) comprenant un système de gestion d'aéronef (AMS) (24), ledit procédé comprenant les étapes consistant à :
mettre en oeuvre (202) un dispositif à mémoire (304)
couplé en service à un processeur (302), le dispositif à mémoire comprenant des instructions informatiques programmées qui donnent instruction au processeur d'afficher au moins une portion d'un écran d'affichage de vol primaire (100) ayant une hauteur prédéterminée ; et
afficher (206) au moins une portion de l'écran
d'affichage de vol primaire (100) comprenant un indicateur de situation horizontale (HSI) (102) ayant une perspective fuyante pour simuler un objet tridimensionnel (3D) ;
**caractérisé en ce que** :
le procédé comprend en outre l'affichage (220) du HSI (102) de sorte que le HSI affiche une image du système anticollision de trafic (TCAS), ladite image TCAS comprend une portion sensiblement verticale représentant une altitude relative d'un autre aéronef, simulant par ailleurs de la sorte un objet 3D sur ledit écran d'affichage de vol primaire (100).

9. Procédé (200) selon la revendication 8, comprenant en outre l'attribution (208, 212) d'une première portion de l'écran d'affichage de vol primaire (100) au HSI (102) et une seconde portion de l'écran d'affichage de vol primaire (100) à au moins un indicateur d'aéronef supplémentaire (104, 120,140).

10. Procédé (200) selon la revendication 9, dans lequel l'attribution (212) d'une seconde portion de l'écran d"affichage de vol primaire (100) à au moins un indicateur d'aéronef (104,120,140) comprend l'affichage au moins un d'un anémomètre (104), d'un altimètre (120) et d'un indicateur d'assiette (140) dans la seconde portion de l'écran d'affichage de vol primaire (100).

11. Procédé (200) selon la revendication 9 ou la revendication 10, dans lequel l'attribution (208) d'une première portion de l'écran d'affichage de vol primaire (100) au HSI (102) comprend l'affichage (210) du HSI de sorte que le HSI occupe une proportion prédéterminée de la hauteur de l'écran d'affichage de vol primaire (100).

12. Procédé (200) selon l'une quelconque des revendications 8 à 11, dans lequel l'affichage (206) d'au moins une portion de l'écran d'affichage de vol primaire (100) comprenant un HSI (102) comprend l'affichage (214) du HSI sous la forme d'un compas.

13. Procédé (200) selon la revendication 12, dans lequel l'affichage (214) du HSI sous la forme d'un compas comprend :
l'affichage (216) d'une pluralité de points cardinaux (172), de valeurs numériques (174) et d'incréments discrets (176) ; et
la simulation (218) d'un mouvement de rotation des
points cardinaux, des valeurs numériques et des incréments discrets en fonction d'un cap de l'aéronef (10).
